# EUROPÄISCHE PATENTANMELDUNG

(11) **EP 4 671 195 A1**
(43) Veröffentlichungstag der Anmeldung: **31.12.2025**
(21) Anmeldenummer: 24184450.5
(22) Anmeldetag: 25.06.2024
(51) Int. Cl.: C01B 3/02, B01D 53/04, B01D 53/047, C01B 3/38, C01B 3/48, C01B 3/56, C01C 1/04

(54) **VERFAHREN UND ANLAGE ZUM GEWINNEN EINES WASSERSTOFFSTROMS**

(71) Anmelder: GasConTec GmbH, 61348 Bad Homburg v. d. Höhe (DE)
(72) Erfinder: LAUER, Wolfgang, 34613 Schwalmstadt (DE); RAPPOLD, Dorit, 60437 Frankfurt (DE); WAGNER, Ulrich, 06406 Bernburg (DE)
(74) Vertreter: Patentanwälte Bauer Vorberg Kayser

(57) **Zusammenfassung**

Die Erfindung betrifft ein Verfahren zum Gewinnen eines Wasserstoffstroms (1), wobei ein kohlenstoffhaltiger Energieträgerstrom (3) und ein Sauerstoffstrom (4) aus einer Sauerstoffgewinnungsanordnung (5) einer Anlage (2) einer ATR-Reaktoranordnung (6) der Anlage (2) zum Gewinnen eines Synthesegasstroms (7) mit Wasserstoff und Kohlenstoffoxiden zugeführt wird, wobei die ATR-Reaktoranordnung (6) aus dem Energieträgerstrom (3) den Synthesegasstrom (7) durch eine autotherme Reformierung mit dem Sauerstoffstrom (4) gewinnt, sodass eine insbesondere katalytische partielle Oxidation die für die endothermen Reformierungsreaktionen erforderliche Wärme bereitstellt, wobei der Synthesegasstrom (7) zumindest teilweise einer Adsorptionsvorrichtung (8) der Anlage (2) zum Trennen des Synthesegasstroms (7) in den Wasserstoff aufweisenden Wasserstoffstrom (1) und in einen jeweils Kohlenstoffoxide aufweisenden ersten Purgestrom (10a) und zweiten Purgestrom (10b) zugeführt wird. Das Verfahren ist dadurch gekennzeichnet, dass der erste Purgestrom (10a) einer Rückgewinnungs-Adsorptionsvorrichtung (11) der Anlage (2) zum Abtrennen von Wasserstoff aus dem ersten Purgestrom (10) zugeführt wird, dass die Rückgewinnungs-Adsorptionsvorrichtung (11) einen den abgetrennten Wasserstoff aufweisenden Rückgewinnungsstrom (12) und einen verbleibenden Recyclestrom (13) bereitstellt, dass der Recyclestrom (13) im Wesentlichen vollständig dem Energieträgerstrom (3) zugeführt wird, dass der zweite Purgestrom (10b) mindestens einem Einsatzstofferhitzer (15a) einer Vielzahl von Einsatzstofferhitzern (15a-e) der Anlage (2) zur Verfeuerung zugeführt wird. Die Erfindung betrifft ebenso ein entsprechende Anlage zur Gewinnung eines Wasserstoffstroms sowie ein Verfahren zur Herstellung von Methanol.

## Beschreibung

Die Erfindung betrifft ein Verfahren zum Gewinnen eines Wasserstoffstroms mit den Merkmalen des Oberbegriffs von Anspruch 1, ein Verfahren zur Herstellung von Ammoniak mit den Merkmalen des Oberbegriffs von Anspruch 14 sowie eine Anlage zum Gewinnen eines Wasserstoffstroms mit den Merkmalen des Oberbegriffs von Anspruch 15.

Die wirtschaftliche Bedeutung von Wasserstoff nimmt zu, insbesondere weil Wasserstoff als Energieträger verwendet werden kann, dessen Einsatz keine Emission von CO2 verursacht. Ebenso kann Wasserstoff als Ausgangsstoff für die Herstellung anderer Stoffe wie etwa Ammoniak dienen, wobei Ammoniak wiederum zum Transport von Wasserstoff verwendet werden kann.

In diesem Zusammenhang besteht erhöhtes Interesse daran, Wasserstoff und ggf. aus diesem Wasserstoff dann auch Ammoniak oder einen anderen Stoff auf eine Weise herzustellen, die einen sehr kleinen CO2-Fußabdruck aufweist. Man spricht im Falle eines sogenannten "low-low carbon footprint" dann auch von "blauem" Wasserstoff bzw. "blauem" Ammoniak wenn der Wasserstoff bzw. der Ammoniak aus Erdgas gewonnen wurde.

Eine grundlegende Möglichkeit zum Gewinnen von Wasserstoff besteht darin, von Synthesegas auszugehen. Dieses Synthesegas kann aus einem kohlenstoffhaltigen Energieträgerstrom wie z. B. Erdgas gewonnen werden.

Jedoch erfordert insbesondere das Gewinnen des Synthesegases aus Erdgas Energie, wobei speziell beim Einsatz eines Steamreformers zu diesem Zweck bis zu 30 % des eingesetzten Erdgases zu seiner Unterfeuerung benötigt werden. Das dabei im Rauchgas enthaltene CO2 wird in die Atmosphäre abgegeben. Ansonsten im Prozess anfallendes CO2 kann mit einer Wäsche abgetrennt und genutzt oder sequestriert werden, ohne dass es zu einer Abgabe in die Atmosphäre kommt.

Eine Verringerung der im Rauchgas emittierten Menge an CO2 entsprechend etwa 10 % des eingesetzten Erdgases lässt sich dadurch erreichen, dass anstelle eines Steamreforming ausschließlich eine autotherme Reformierung (ATR) zur Erzeugung des Synthesegases eingesetzt wird. Bei der autothermen Reformierung, bei welcher die erforderliche Temperatur durch eine katalytische partielle Oxidation mit Sauerstoff erzeugt wird, ist keine externe Zufuhr von Hitze für die Erzeugung des Synthesegases erforderlich, sondern allenfalls eine Vorheizung des Energieträgerstroms durch gasgefeuerte Einsatzstofferhitzer ("fired heater") vor Zuführung zur autothermen Reformierung. Hinzu kommt, dass die Luftzerlegung für die autotherme Reformierung auch gleich den Stickstoff für eine ggf. angestrebte Ammoniaksynthese bereitstellen kann.

Bereits sehr niedrige Emissionswerte werden erreicht, indem man das Off-Gas der PSA, welches auch als Abgas bezeichnet werden kann, das bei der Auftrennung des Synthesegases in Wasserstoff und Off-Gas anfällt, zur notwendigen Vorheizung des Synthesegases vor dem ATR nutzt. Die verbleibende Energiedifferenz wird mit entschwefeltem Erdgas ausgeglichen.

Ebenso kann an den gasgefeuerten Einsatzstofferhitzern zur Verringerung der CO2-Emissionen auch dekarbonisiertes Synthesegas verwenden. Das setzt allerdings voraus, dass eine sehr effektive CO2-Wäsche eingesetzt wird, da ansonsten das noch nicht abgeschiedene CO2 im Synthesegas die Restemission wieder erhöht.

Zudem bedarf es darüber hinaus häufig noch einer weiteren Aufarbeitung des dekarbonisierten Synthesegases, da insbesondere Methan aus dem Methanslip des ATR den Hauptteil der CO2 Emission nach Verbrennung in den gasgefeuerten Einsatzstofferhitzern ausmacht. Aber auch eine solche Aufarbeitung kann nicht verhindern, dass das Methan auf die eine oder andere Weise in das Off-Gas gelangt. Eine Verringerung der Restemissionen unter den Zielwert von 0,2 t CO2 pro t Ammoniak ist damit nicht möglich.

Die EP 4 269 332 A1, von welcher die vorliegende Erfindung als nächstkommend ausgeht, zeigt ein Verfahren und eine Anlage zum Herstellen von Ammoniak, wobei der hierzu erforderliche Wasserstoff aus Erdgas gewonnen wird. Doch auch die hier offenbarte Befeuerung der gasgefeuerten Einsatzstofferhitzer mit bereits hergestelltem, hochreinen Wasserstoff verhindert nicht das Auftreten des Methans im Off-Gas. Und es ist natürlich ineffektiv, eine PSA auf höchste Reinheit auszulegen, um dann hergestellten, hochreinen Wasserstoff wieder zu verbrennen.

Ausgehend vom Stand der Technik besteht daher die Aufgabe der Erfindung darin, einen verbesserten Ansatz für das Gewinnen eines Wasserstoffstroms bereitzustellen, welcher den CO2-Fußabdruck beim Gewinnen weiter verringern kann.

Bezogen auf ein Verfahren zum Gewinnen von Wasserstoff gemäß dem Oberbegriff von Anspruch 1 wird diese Aufgabe durch die Merkmale des kennzeichnenden Teils von Anspruch 1 gelöst. Bezogen auf ein Verfahren zur Herstellung von Ammoniak gemäß dem Oberbegriff von Anspruch 14 wird diese Aufgabe durch die Merkmale des kennzeichnenden Teils von Anspruch 14 gelöst. Bezogen auf eine Anlage zum Gewinnen von Wasserstoff gemäß dem Oberbegriff von Anspruch 15 wird diese Aufgabe durch die Merkmale des kennzeichnenden Teils von Anspruch 15 gelöst.

Der Erfindung liegt die Erkenntnis zugrunde, dass insgesamt die Menge an emittiertem CO2 in einer Anlage zum Gewinnen von Wasserstoff mit einer autothermen Reformierung überraschenderweise dadurch noch weiter verringert werden kann, dass die Einsatzstofferhitzer der Anlage weit gehend elektrisch betrieben werden und nur ein geringerer Teil der Einsatzstofferhitzer zur Vermeidung von Anreicherungsprozessen durch Verfeuerung von Off-Gas betrieben wird. Solche elektrisch betriebenen Einsatzstofferhitzer werden auch als elektrische Heizvorrichtungen bezeichnet. Es hat sich herausgestellt, dass auf diese Weise die Abgabe von CO2 minimiert wird und gleichzeitig der gesamte Prozess effizienter wird, da auf Strom anstatt von Wasserstoff zum Betrieb der Einsatzstofferhitzer zurückgegriffen werden kann.

Die Unteransprüche 9 und 11 beschreiben eine besonders vorteilhafte Auswahl eines speziellen Einsatzstofferhitzers zur Speisung durch das Abgas.

Weitere Einzelheiten, Merkmale, Ausgestaltungen, Ziele und Vorteile der vorliegenden Erfindung werden nachfolgend anhand der lediglich Ausführungsbeispiele wiedergebenden Zeichnung erläutert. In der Zeichnung zeigt
- Fig. 1: schematisch das Fließbild einer vorschlagsgemäßen Anlage zur Ausführung des vorschlagsgemäßen Verfahrens gemäß einem ersten Ausführungsbeispiel und
- Fig. 2: schematisch das Fließbild einer vorschlagsgemäßen Anlage zur Ausführung des vorschlagsgemäßen Verfahrenns gemäß einem zweiten Ausführungsbeispiel.

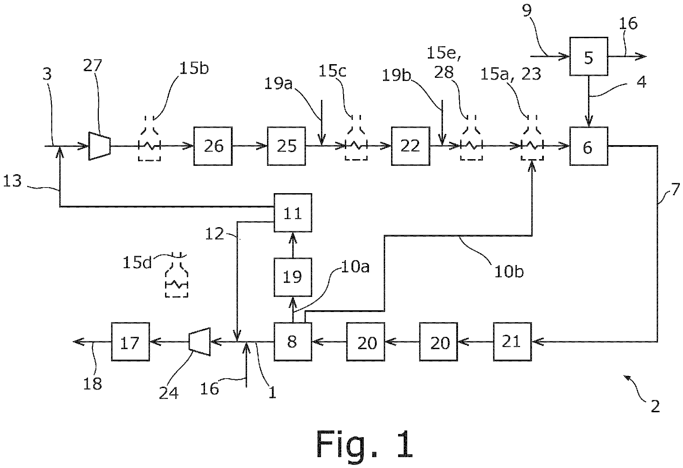

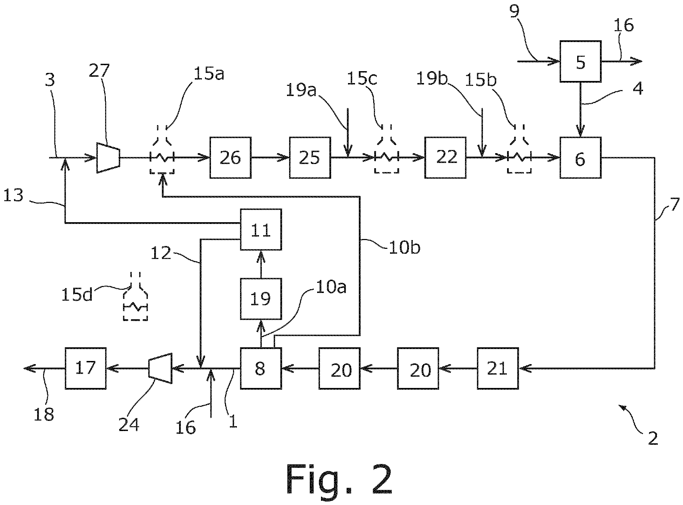

Das vorschlagsgemäße Verfahren dient dem Gewinnen eines Wasserstoffstroms 1, wobei ein kohlenstoffhaltiger Energieträgerstrom 3 und ein Sauerstoffstrom 4 aus einer Sauerstoffgewinnungsanordnung 5 einer Anlage 2 einer ATR-Reaktoranordnung 6 der Anlage 2 zum Gewinnen eines Synthesegasstroms 7 mit Wasserstoff und Kohlenstoffoxiden zugeführt wird. Das Verfahren wird zunächst anhand des Ausführungsbeispiels der Fig. 1 beschrieben. Soweit nicht anders beschrieben, entspricht das Ausführungsbeispiel der Fig. 2 dem Ausführungsbeispiel der Fig. 1. Vorzugsweise besteht der Sauerstoffstrom 4 im Wesentlichen aus Sauerstoff.

Beim vorschlagsgemäßen Verfahren gewinnt die ATR-Reaktoranordnung 6 aus dem Energieträgerstrom 3 den Synthesegasstrom 7 durch eine autotherme Reformierung mit dem Sauerstoffstrom 4, sodass eine insbesondere katalytische partielle Oxidation die für die endothermen Reformierungsreaktionen erforderliche Wärme bereitstellt.

Beim vorschlagsgemäßen Verfahren wird weiter der Synthesegasstrom 7 zumindest teilweise einer Adsorptionsvorrichtung 8 der Anlage 2 zum Trennen des Synthesegasstroms 7 in den Wasserstoff aufweisenden Wasserstoffstrom 1 und in einen jeweils Kohlenstoffoxide aufweisenden ersten Purgestrom 10a und zweiten Purgestrom 10b zugeführt. Der erste Purgestrom 10a und der zweite Purgestrom 10b weisen darüber hinaus auch Methan und Wasserstoff auf.

Das vorschlagsgemäße Verfahren ist dadurch gekennzeichnet, dass der erste Purgestrom 10a einer Rückgewinnungs-Adsorptionsvorrichtung 11 der Anlage 2 zum Abtrennen von Wasserstoff aus dem ersten Purgestrom 10a zugeführt wird.

Das vorschlagsgemäße Verfahren ist weiter dadurch gekennzeichnet, dass die Rückgewinnungs-Adsorptionsvorrichtung 11 einen den abgetrennten Wasserstoff aufweisenden Rückgewinnungsstrom 12 und einen verbleibenden Recyclestrom 13 bereitstellt, dass der Recyclestrom 13 im Wesentlichen vollständig dem Energieträgerstrom 3 zugeführt wird und dass der zweite Purgestrom 10b mindestens einem Einsatzstofferhitzer 15a einer Vielzahl von Einsatzstofferhitzern 15a-e der Anlage 2 zur Verfeuerung zugeführt wird. Anders ausgedrückt wird der zweite Purgestrom 10b diesem mindestens einen Einsatzstofferhitzer 15a zwecks Erhitzung durch Verbrennung zugeführt. Es handelt sich bei einem solche Einsatzstofferhitzer 15a offenkundig um einen gasgefeuerten Einsatzstofferhitzer. Die Anlage 2 des ersten Ausführungsbeispiels der Fig. 1 weist insgesamt fünf Einsatzstofferhitzer 15a-e auf, wohingegen die Anlage 2 des zweiten Ausführungsbeispiels der Fig. 2 insgesamt vier Einsatzstofferhitzer 15a-d aufweist.

Es hat sich herausgestellt, dass auf diese Weise das Erfordernis, Methan und Inertgase aus dem Kreislauf zur Vermeidung ihrer Anreicherung zu entfernen mit dem Energiebedarf eines gasgefeuerten Einsatzstofferhitzers 15a in Übereinstimmung gebracht werden kann. Die ausgekreiste Gasmenge erfüllt somit eine doppelte Funktion, nämlich Bereitstellung der Energie für den gasgefeuerten Einsatzstofferhitzer 15a und Entfernung von Methan und Inertgasen aus dem Kreislauf.

Über die Zuführung des Recyclestroms 13 zum Energieträgerstrom 3 gelangt insbesondere das in dem Abgasstrom 13 vorhandene Methan wieder zur ATR-Reaktoranordnung 6, in der das Methan zumindest zu einem Teil aufgespalten werden kann. Damit besteht die Möglichkeit, dass der Kohlenstoff bzw. das aus dem Methan gewonnene Kohlenstoffoxid sequestriert wird und weder den Wasserstoffstrom 1 belastet noch als CO2 in die Atmosphäre abgegeben wird.

Grundsätzlich kann der Massenstrom des ersten Purgestroms 10a in einem beliebigen Verhältnis zum Massenstrom des zweiten Purgestroms 10b stehen. Bevorzugt ist, dass der zweite Purgestrom 10b einen Massenstrom von weniger als 30 % und insbesondere weniger als 25 % des kombinierten Massenstroms des ersten Purgestroms 10a und des zweiten Purgestroms 10b aufweist. Alternativ oder zusätzlich kann es sein, dass der zweiten Purgestrom 10b einen Massenstrom von mindestens 5 % , vorzugsweise von mindestens 10 % und insbesondere von mindestens 15 % des kombinierten Massenstroms des ersten Purgestroms 10a und des zweiten Purgestroms 10b aufweist. Ebenso kann es sein, dass der zweite Purgestrom 10b einen Massenstrom von im Wesentlichen 20 % des kombinierten Massenstroms des ersten Purgestroms 10a und des zweiten Purgestroms 10b aufweist.

Eine bevorzugte Ausführungsform des vorschlagsgemäßen Verfahrens ist dadurch gekennzeichnet, dass die weiteren Einsatzstofferhitzer 15b-e der Anlage 2 elektrisch betrieben werden. Es handelt sich dementsprechend um elektrische Heizvorrichtungen. Damit ist weder eine Verfeuerung von Wasserstoff noch eine Verfeuerung von Abgas erforderlich, welche zu CO2-Emissionen führen würde. Bei den weiteren Einsatzstofferhitzern 15b-e handelt es sich um diejenigen Einsatzstofferhitzer 15b-e der Vielzahl von Einsatzstofferhitzern 15a-e der Anlage 2, welche nicht vom zweiten Purgestrom 10b gespeist werden.

Noch eine weitere bevorzugte Ausführungsform des vorschlagsgemäßen Verfahrens ist dadurch gekennzeichnet, dass die Adsorptionsvorrichtung 8 zur Druckwechsel-Adsorption und/oder zur Temperaturwechsel-Adsorption eingerichtet ist.

Ebenso ist es bevorzugt, dass die Rückgewinnungs-Adsorptionsvorrichtung 11 zur Druckwechsel-Adsorption und/oder zur Temperaturwechsel-Adsorption eingerichtet ist.

Gemäß einer bevorzugten Ausführungsform des vorschlagsgemäßen Verfahrens ist es vor gesehen, dass die Anlage 2 einen Rückgewinnungskompressor 19 aufweist, welcher den ersten Purgestrom 10a vor Zuführung zur Rückgewinnungs-Adsorptionsvorrichtung 11 druckerhöht.

Gemäß einer weiteren bevorzugten Ausführungsform des vorschlagsgemäßen Verfahrens ist vorgesehen, dass der Synthesegasstrom 7 einer Kohlenstoffdioxidwäsche 20 der Anlage 2 zum Auswaschen mindestens eines Teiles des Kohlenstoffdioxids aus dem Synthesegasstrom 7 zugeführt wird. Das auf diese Weise ausgewaschene Kohlenstoffdioxid wird vorzugsweise sequestriert. Hier ist weiter bevorzugt, dass in der Kohlenstoffdioxidwäsche 20 das Kohlenstoffdioxid durch ein Methanol umfassendes Waschmedium ausgewaschen wird. Weiter ist bevorzugt, dass das Kohlenstoffdioxid mehrstufig aus dem Synthesegasstrom 7 in der Kohlenstoffdioxidwäsche 20 ausgewaschen wird. Das auf diese Weise ausgewaschene Kohlenstoffdioxid verringert den Kohlenstoffdioxidgehalt des Recyclestroms 13 und kann sequestriert werden.

Eine bevorzugte Ausführungsform des vorschlagsgemäßen Verfahrens ist dadurch gekennzeichnet, dass der Synthesegasstrom 7 einer Shiftvorrichtung 21 der Anlage 2 zugeführt wird, dass der der Shiftvorrichtung 21 zugeführte Synthesegasstrom 7 Wasser aufweist und dass in der Shiftvorrichtung 21 eine Wassergas-Shift-Reaktion zur Umsetzung zumindest eines überwiegenden Teils des Kohlenstoffmonoxids des Synthesegasstroms 7 mit dem Wasser in Kohlenstoffdioxid und Wasserstoff stattfindet. Vorzugsweise ist die Shiftvorrichtung 21 der Kohlenstoffdioxidwäsche 20 prozesstechnisch vorgelagert. Das somit entstandene Kohlenstoffdioxid kann dann in der prozesstechnisch folgenden Kohlenstoffdioxidwäsche 20 ausgewaschen werden.

Eine weitere bevorzugte Ausführungsform des vorschlagsgemäßen Verfahrens ist dadurch gekennzeichnet, dass der zweite Purgestrom 10b genau einem Einsatzstofferhitzer 15a der Anlage 2 zur Verfeuerung zugeführt wird. Es hat sich herausgestellt, dass auf diese Weise exakt die richtige Balance zwischen der Verfeuerung des ausgekreisten Gases und dem elektrischen Betrieb der weiteren Einsatzstofferhitzer 15b-e erreicht wird.

Gemäß einer ersten bevorzugten Variante handelt es sich bei dem genau einen Einsatzstofferhitzer 15a um denjenigen Einsatzstofferhitzer 15a der Anlage 2, welcher den größten Energiebedarf hat. Anders ausgedrückt ist es derjenige Einsatzstofferhitzer 15a, welcher die größte Heizleistung erfordert. Diese Variante entspricht dem Ausführungsbeispiel der Fig. 1. Auf diese Weise wird der Bedarf an Energie aus einer sonstigen Quelle für die Vielzahl der Einsatzstofferhitzer 15a-e insgesamt minimiert. Werden die sonstigen Einsatzstofferhitzer 15a-e beispielsweise mit Wasserstoff unterfeuert und ist dieser Wasserstoff in der Anlage 2 knapp oder nur mit einer vergleichsweise ungünstigen CO2-Bilanz zu haben, so ist gemäß dieser Variante weniger Wasserstoff für den Betrieb der Einsatzstofferhitzer 15a-e insgesamt erforderlich. Bei dieser Variante ist auch mit hoher Wahrscheinlichkeit gewährleistet, dass ausreichend Gas aus dem Kreislauf entfernt wird um eine Anreicherung von Methan und Inertstoffen zu vermeiden.

Gemäß einer zweiten bevorzugten Variante handelt es sich bei dem genau einen Einsatzstofferhitzer 15a um denjenigen Einsatzstofferhitzer 15a der Anlage 2, welcher den geringsten Energiebedarf hat. Dies entspricht dem Ausführungsbeispiel der Fig. 2, welches ansonsten bis auf den erwähnten Unterschied in der Gesamtzahl der Einsatzstofferhitzer 15a-e zu dem Ausführungsbeispiel der Fig. 1 identisch ist. Anders ausgedrückt ist es hier derjenige Einsatzstofferhitzer 15a, welcher die geringste Heizleistung erfordert. Auf diese Weise muss also nur sehr wenig Gas ausgekreist werden, um diesen Einsatzstofferhitzer 15a zu betreiben, weswegen die damit verbundenen CO2-Emissionen auch besonders gering sind. Hier kann es sein, dass dieser Einsatzstofferhitzer 15a mit dem geringsten Energiebedarf derjenige Einsatzstofferhitzer 15a ist, welcher unter der Vielzahl von Einsatzstofferhitzern 15a prozesstechnisch zuerst angeordnet ist. Anders ausgedrückt handelt es sich um den ersten Einsatzstofferhitzer 15a, dem der Energieträgerstrom 3 zugeführt wird. Es kann sein, dass dieser Einsatzstofferhitzer 15a weniger als 50 % des Energiebedarfs desjenigen Einsatzstofferhitzers 15a-e der Vielzahl von Einsatzstofferhitzern 15a-e mit dem nächst größeren Energiebedarf aufweist.

Bevorzugt ist weiter, dass der Rückgewinnungsstrom 12 zumindest teilweise dem Wasserstoffstrom 1 zugeführt wird. Insbesondere kann es sein, dass der Rückgewinnungsstrom im Wesentlichen vollständig dem Wasserstoffstrom 1 zugeführt wird.

Gemäß einer bevorzugten Ausführungsform des vorschlagsgemäßen Verfahrens ist vorgesehen dass die Anlage 2 einen Pre-Reformer 22 zum Aufspalten von Kohlenwasserstoffen mit mindestens zwei Kohlenstoffatomen in Methan aufweist, welchem Pre-Reformer 22 der Energieträgerstrom 3 vor Zuführung zur ATR-Reaktoranordnung 6 zugeführt wird. Hier ist weiter bevorzugt, dass der zweite Purgestrom 10b einem ATR-Einsatzstofferhitzer 23 der Vielzahl von Einsatzstofferhitzern 15a-e zur Verfeuerung zugeführt wird, welcher ATR-Einsatzstofferhitzer 23 prozesstechnisch zwischen dem Pre-Reformer 22 und der ATR-Reaktoranordnung 6 angeordnet ist. Diese Variante entspricht dem Ausführungsbeispiel der Fig. 1. Vorzugsweise ist dieser ATR-Einsatzstofferhitzer 23 der genau eine Einsatzstofferhitzer 15a der Vielzahl von Einsatzstofferhitzern 15a-e, welchem der zweite Purgestrom 10b zur Verfeuerung zugeführt wird. Es hat sich nämlich herausgestellt, dass der Energiebedarf dieses Einsatzstofferhitzers 15a besonders hoch ist. Es kann daher sein, dass dieser ATR-Einsatzstofferhitzer 23 derjenige Einsatzstofferhitzer 15a mit dem größten Energiebedarf ist. Daher kann es vorteilhaft sein, genau diesen Einsatzstofferhitzer 15a mit dem Abgas aus dem Synthesegaskreislauf anstelle etwa elektrisch zu betreiben.

Bevorzugt ist bei dieser Variante, wie auch in der Fig. 1 dargestellt, dass dem genau einen Einsatzstofferhitzer 15a, welchem der zweite Purgestrom 10b zur Verfeuerung zugeführt wird, prozesstechnisch vorgelagert ein elektrisch betriebener Einsatzstofferhitzer 15e der Anlage 2 angeordnet ist. Wie gezeigt und bevorzugt handelt es sich bei dem Einsatzstofferhitzer 15a, welchem der zweite Purgestrom 10b zur Verfeuerung zugeführt wird, um den ATR-Einsatzstofferhitzer 23. Insbesondere kann der elektrisch betriebene Einsatzstofferhitzer 15e diesem genau einen Einsatzstofferhitzer 15a unmittelbar prozesstechnisch vorgelagert sein. Dieser elektrisch betriebene Einsatzstofferhitzer 15e kann auch als elektrischer Vorwärmer 28 bezeichnet werden. Anders ausgedrückt liefern dann dieser elektrische Vorwärmer 28 und der ATR-Einsatzstofferhitzer 23 gemeinsam die für die ATR-Reaktoranordnung 6 erforderliche Heizleistung.

Neben dem Pre-Reformer 22 kann die Anlage 2 weitere Vorrichtungen aufweisen, denen der Energieträgerstrom 3 prozesstechnisch vor der ATR-Reaktoranordnung 6 zugeführt wird. Vorzugsweise umfasst die Anlage 2 eine Sättigungsstufe 25, welcher der Energieträgerstrom 3 vor Zuführung zur ATR-Reaktoranordnung 6 zugeführt wird.

Alternativ oder zusätzlich kann die Anlage 2 eine Entschwefelungsstufe 26 zur Entschwefelung des Energieträgerstroms 3 vor Zuführung zur ATR-Reaktoranordnung 6 umfassen. Diese Entschwefelungsstufe 26 ist vorzugsweise dem Pre-Reformer 22 prozesstechnisch vorgeschaltet. Ebenso kann die Anlage 2 einen Erdgaskompressor 27 zur Druckerhöhung des Energieträgerstroms 3 umfassen, welcher vorzugsweise der Entschwefelungsstufe 26 prozesstechnisch vorgeschaltet ist.

Gemäß einer weiteren bevorzugten Ausführungsform des vorschlagsgemäßen Verfahrens ist vorgesehen, dass der Energieträgerstrom 3 Erdgas umfasst. Es kann auch sein, dass der Energieträgerstrom 3 im Wesentlichen aus Erdgas besteht.

Bevorzugt ist, dass der Wasserstoffstrom 1 im Wesentlichen aus Wasserstoff besteht. Ebenso ist es bevorzugt, dass der Rückgewinnungsstrom 12 im Wesentlichen aus Wasserstoff besteht.

Beim vorschlagsgemäßen Verfahren zur Herstellung von Ammoniak 18 wird einer Ammoniak-Reaktoranordnung 17 der Anlage 2 ein nach dem vorschlagsgemäßen Verfahren zum Gewinnen eines Wasserstoffstroms 1 gewonnener Wasserstoffstrom 1 sowie ein Stickstoffstrom 16 zugeführt. Vorschlagsgemäß wird der von dem Wasserstoffstrom 1 umfasste Wasserstoff und von dem Stickstoffstrom 16 umfasster Stickstoff in der Ammoniak-Reaktoranordnung 17 in Ammoniak umgewandelt. Damit wird der vorschlagsgemäße Vorteil zum Gewinnen des Wasserstoffstroms für 1 die Herstellung von Ammoniak 18 genutzt. Bevorzugt weist die Anlage 2 einen Ammoniak-Synthesekompressor 24 auf, welcher den Wasserstoffstrom 1 und den Stickstoffstrom 16 vor Zuführung zur Ammoniak-Reaktoranordnung 17 druckerhöht.

Die vorschlagsgemäße Anlage 2 dient dem Gewinnen eines Wasserstoffstroms 1 und umfasst eine Sauerstoffgewinnungsanordnung 5 zum Gewinnen eines Sauerstoffstroms 4 sowie eine ATR-Reaktoranordnung 6 zum Gewinnen eines Synthesegasstroms 7 mit Wasserstoff und Kohlenstoffoxiden, welcher ATR-Reaktoranordnung 6 ein kohlenstoffhaltiger Energieträgerstrom 3 und der Sauerstoffstrom 4 zugeführt wird. Bei der Sauerstoffgewinnungsanordnung 5 handelt es sich vorzugsweise um eine Luftzerlegung, welche die Umgebungsluft 9 zerlegt und auf diese Weise auch den Stickstoffstrom 16 bereitstellt.

Bei der vorschlagsgemäßen Anlage 2 ist die ATR-Reaktoranordnung 6 dazu eingerichtet ist, aus dem Energieträgerstrom 3 den Synthesegasstrom 7 durch eine autotherme Reformierung mit dem Sauerstoffstrom 4 zu gewinnen, sodass eine insbesondere katalytische partielle Oxidation die für die endothermen Reformierungsreaktionen erforderliche Wärme bereitstellt.

Die vorschlagsgemäße Anlage 2 umfasst weiter eine Adsorptionsvorrichtung 8 zum Trennen zumindest eines Teils des Synthesegasstroms 7 in den Wasserstoff aufweisenden Wasserstoffstrom 1 und in einen jeweils Kohlenstoffoxide aufweisenden ersten Purgestrom 10a und zweiten Purgestrom 10b sowie eine Vielzahl von Einsatzstofferhitzern 15a-e.

Die vorschlagsgemäße Anlage 2 ist dadurch gekennzeichnet, dass die Anlage 2 eine Rückgewinnungs-Adsorptionsvorrichtung 11 zum Abtrennen von Wasserstoff aus dem ersten Purgestrom 10a aufweist, dass die Rückgewinnungs-Adsorptionsvorrichtung 11 einen den abgetrennten Wasserstoff aufweisenden Rückgewinnungsstrom 12 und einen verbleibenden Recyclestrom 13 bereitstellt, dass der Recyclestrom 13 im Wesentlichen vollständig dem Energieträgerstrom 3 zugeführt wird und dass der zweite Purgestrom 10b mindestens einem Einsatzstofferhitzer 15a-e der Vielzahl von Einsatzstofferhitzern 15a-e zur Verfeuerung zugeführt wird.

Vorstehend beschriebene bevorzugte Ausgestaltungen, Merkmale und Eigenschaften des vorschlagsgemäßen Verfahrens entsprechen bevorzugten Ausgestaltungen, Merkmalen und Eigenschaften der vorschlagsgemäßen Anlage und umgekehrt.

## Patentansprüche

1. Verfahren zum Gewinnen eines Wasserstoffstroms (1), wobei ein kohlenstoffhaltiger Energieträgerstrom (3) und ein Sauerstoffstrom (4) aus einer Sauerstoffgewinnungsanordnung (5) einer Anlage (2) einer ATR-Reaktoranordnung (6) der Anlage (2) zum Gewinnen eines Synthesegasstroms (7) mit Wasserstoff und Kohlenstoffoxiden zugeführt wird, wobei die ATR-Reaktoranordnung (6) aus dem Energieträgerstrom (3) den Synthesegasstrom (7) durch eine autotherme Reformierung mit dem Sauerstoffstrom (4) gewinnt, sodass eine insbesondere katalytische partielle Oxidation die für die endothermen Reformierungsreaktionen erforderliche Wärme bereitstellt, wobei der Synthesegasstrom (7) zumindest teilweise einer Adsorptionsvorrichtung (8) der Anlage (2) zum Trennen des Synthesegasstroms (7) in den Wasserstoff aufweisenden Wasserstoffstrom (1) und in einen jeweils Kohlenstoffoxide aufweisenden ersten Purgestrom (10a) und zweiten Purgestrom (10b) zugeführt wird, **dadurch gekennzeichnet, dass** der erste Purgestrom (10a) einer Rückgewinnungs-Adsorptionsvorrichtung (11) der Anlage (2) zum Abtrennen von Wasserstoff aus dem ersten Purgestrom (10) zugeführt wird, dass die Rückgewinnungs-Adsorptionsvorrichtung (11) einen den abgetrennten Wasserstoff aufweisenden Rückgewinnungsstrom (12) und einen verbleibenden Recyclestrom (13) bereitstellt, dass der Recyclestrom (13) im Wesentlichen vollständig dem Energieträgerstrom (3) zugeführt wird, dass der zweite Purgestrom (10b) mindestens einem Einsatzstofferhitzer (15a) einer Vielzahl von Einsatzstofferhitzern (15a-e) der Anlage (2) zur Verfeuerung zugeführt wird

2. Verfahren nach Anspruch 1, **dadurch gekennzeichnet, dass** die weiteren Einsatzstofferhitzer (15b-e) der Anlage (2) elektrisch betrieben werden.

3. Verfahren nach Anspruch 1 oder 2, **dadurch gekennzeichnet, dass** die Adsorptionsvorrichtung (8) zur Druckwechsel-Adsorption und/oder zur Temperaturwechsel-Adsorption eingerichtet ist, vorzugsweise, dass die Rückgewinnungs-Adsorptionsvorrichtung (11) zur Druckwechsel-Adsorption und/oder zur Temperaturwechsel-Adsorption eingerichtet ist.

4. Verfahren nach einem der Ansprüche 1 bis 3, **dadurch gekennzeichnet, dass** die Anlage (2) einen Rückgewinnungskompressor (19) aufweist, welcher den ersten Purgestrom (9) vor Zuführung zur Rückgewinnungs-Adsorptionsvorrichtung (11) druckerhöht.

5. Verfahren nach einem der Ansprüche 1 bis 4, **dadurch gekennzeichnet, dass** der Synthesegasstrom (7) einer Kohlenstoffdioxidwäsche (20) der Anlage (2) zum Auswaschen mindestens eines Teiles des Kohlenstoffdioxids aus dem Synthesegasstrom (7) zugeführt wird, dass in der Kohlenstoffdioxidwäsche (20) das Kohlenstoffdioxid durch ein Methanol umfassendes Waschmedium ausgewaschen wird.

6. Verfahren nach Anspruch 5, **dadurch gekennzeichnet, dass** das Kohlenstoffdioxid mehrstufig aus dem Synthesegasstrom (6) in der Kohlenstoffdioxidwäsche (19) ausgewaschen wird.

7. Verfahren nach einem der Ansprüche 1 bis 6, **dadurch gekennzeichnet, dass** der Synthesegasstrom (7), vorzugsweise der Kohlenstoffdioxidwäsche (20) prozesstechnisch vorgelagert, einer Shiftvorrichtung (21) der Anlage (2) zugeführt wird, dass der der Shiftvorrichtung (21) zugeführte Synthesegasstrom (7) Wasser aufweist und dass in der Shiftvorrichtung (21) eine Wassergas-Shift-Reaktion zur Umsetzung zumindest eines überwiegenden Teils des Kohlenstoffmonoxids des Synthesegasstroms (7) mit dem Wasser in Kohlenstoffdioxid und Wasserstoff stattfindet.

8. Verfahren nach einem der Ansprüche 1 bis 7, **dadurch gekennzeichnet, dass** der zweite Purgestrom (10b) genau einem Einsatzstofferhitzer (15a) der Anlage (2) zur Verfeuerung zugeführt wird.

9. Verfahren nach Anspruch 8, **dadurch gekennzeichnet, dass** dem genau einen Einsatzstofferhitzer (15a), welchem der zweite Purgestrom (10b) zur Verfeuerung zugeführt wird, prozesstechnisch vorgelagert ein elektrisch betriebener Einsatzstofferhitzer (15e) der Anlage (2) angeordnet ist.

10. Verfahren nach einem der Ansprüche 1 bis 9, **dadurch gekennzeichnet, dass** der Rückgewinnungsstrom (12) zumindest teilweise dem Wasserstoff-strom (1) zugeführt wird.

11. Verfahren nach einem der Ansprüche 1 bis 10, **dadurch gekennzeichnet, dass** die Anlage (2) einen Pre-Reformer (22) zum Aufspalten von Kohlenwasserstoffen mit mindestens zwei Kohlenstoffatomen in Methan aufweist, welchem Pre-Reformer (22) der Energieträgerstrom (3) vor Zuführung zur ATR-Reaktoranordnung (6) zugeführt wird, vorzugsweise, dass der zweite Purgestrom (14) einem ATR-Einsatzstofferhitzer (23) der Vielzahl von Einsatzstofferhitzern (15a-e) zur Verfeuerung zugeführt wird, welcher prozesstechnisch zwischen dem Pre-Reformer (22) und der ATR-Reaktoranordnung (6) angeordnet ist.

12. Verfahren nach einem der Ansprüche 1 bis 11, **dadurch gekennzeichnet, dass** der Energieträgerstrom (3) Erdgas umfasst.

13. Verfahren nach einem der Ansprüche 1 bis 12, **dadurch gekennzeichnet, dass** der Wasserstoffstrom (1) im Wesentlichen aus Wasserstoff besteht, vorzugsweise, dass der Rückgewinnungsstrom (12) im Wesentlichen aus Wasserstoff besteht.

14. Verfahren zur Herstellung von Ammoniak, **dadurch gekennzeichnet, dass** einer Ammoniak-Reaktoranordnung (17) der Anlage (2) gemäß einem Verfahren nach einem der Ansprüche 1 bis 13 gewonnener Wasserstoffstrom (1) sowie ein Stickstoffstrom (16) zugeführt wird und dass von dem Wasserstoffstrom (1) umfasster Wasserstoff und von dem Stickstoffstrom (16) umfasster Stickstoff in der Ammoniak-Reaktoranordnung (17) in Ammoniak umgewandelt wird.

15. Anlage (2) zum Gewinnen eines Wasserstoffstroms (1), die Anlage (2) umfassend eine Sauerstoffgewinnungsanordnung (5) zum Gewinnen eines Sauerstoffstroms (4), umfassend eine ATR-Reaktoranordnung (6) zum Gewinnen eines Synthesegasstroms (7) mit Wasserstoff und Kohlenstoffoxiden, welcher ATR-Reaktoranordnung (6) ein kohlenstoffhaltiger Energieträgerstrom (3) und der Sauerstoffstrom (4) zugeführt wird, wobei die ATR-Reaktoranordnung (6) dazu eingerichtet ist, aus dem Energieträgerstrom (3) den Synthesegasstrom (7) durch eine autotherme Reformierung mit dem Sauerstoffstrom (4) zu gewinnen, sodass eine insbesondere kata-lythische partielle Oxidation die für die endothermen Reformierungsreaktionen erforderliche Wärme bereitstellt, die Anlage (2) weiter umfassend eine Adsorptionsvorrichtung (8) zum Trennen zumindest eines Teils des Synthesegasstroms (7) in den Wasserstoff aufweisenden Wasserstoffstrom (1) und in einen jeweils Kohlenstoffoxide aufweisenden ersten Purgestrom (10a) und zweiten Purgestrom (10b) und die Anlage (2) umfassend eine Vielzahl von Einsatzstofferhitzern (15a-e), **dadurch gekennzeichnet, dass** die Anlage (2) eine Rückgewinnungs-Adsorptionsvorrichtung (11) zum Abtrennen von Wasserstoff aus dem ersten Purgestrom (10) aufweist, wobei die Rückgewinnungs-Adsorptionsvorrichtung (11) einen den abgetrennten Wasserstoff aufweisenden Rückgewinnungsstrom (12) und einen verbleibenden Recyclestrom (13) bereitstellt, dass der Recyclestrom (13) im Wesentlichen vollständig dem Energieträgerstrom (3) zugeführt wird, und dass der zweite Purgestrom (10b) mindestens einem Einsatzstofferhitzer (15a-e) der Vielzahl zur Verfeuerung zugeführt wird.
